Europäisches Patentamt

European Patent Office

Office européen des brevets

(19)

(11) Veröffentlichungsnummer: **0 272 381**

**A1**

(12) # EUROPÄISCHE PATENTANMELDUNG

(21) Anmeldenummer: 87113072.0

(22) Anmeldetag: 08.09.87

(51) Int. Cl.4: **F16J 9/24** , F16J 15/54 ,
F16J 15/34

(30) Priorität: 17.11.86 DE 3639304

(43) Veröffentlichungstag der Anmeldung:
29.06.88 Patentblatt 88/26

(84) Benannte Vertragsstaaten:
DE FR GB IT SE

(71) Anmelder: FORD-WERKE
AKTIENGESELLSCHAFT
Werk Köln-Niehl Henry-Ford-Strasse
Postfach 60 40 02
D-5000 Köln 60(DE)

(84) DE IT SE

(71) Anmelder: FORD MOTOR COMPANY LIMITED
Eagle Way
Brentwood Essex CM13 3BW(GB)

(84) GB

(71) Anmelder: FORD FRANCE SOCIETE ANONYME
344 Avenue Napoléon Bonaparte B.P. 307
F-92506 Rueil Malmaison Cedex(FR)

(84) FR

(72) Erfinder: Graef, Kurt
Römerfeldstrasse 5
D-5024 Pulheim(DE)
Erfinder: Ackermann, Rolf
Besslenkäulchen 13
D-5000 Köln 71(DE)

(74) Vertreter: Ritzkowsky, Harald, Dipl.-Ing.
Ford-Werke Aktiengesellschaft
Patentabteilung NH/DRP Henry-Ford-Strasse
D-5000 Köln 60(DE)

(54) **Dichtringanordnung zwischen sich relativ zueinander drehenden Maschinenbauteilen.**

(57) Bei einer Dichtringanordnung zwischen sich relativ zueinander drehenden Maschinenbauteilen, mit einem einen quadratischen oder rechteckigen Querschnitt aufweisenden, geschlitzten oder geteilten Dichtring aus reibungsminderndem Material, der mit axialem und radialem Spiel in einer Nut des einen Bauteiles mit seinem größeren Radialabschnitt angeordnet ist und mit dem Umfang seines kleineren Radialabschnittes am anderen Bauteil gleitet, ist der Dichtring (5 bzw. 6) an seiner einen zur Druckseite (Druckmittelkanal 2) liegenden Seitenflanke (7 bzw. 8) mit einem sich axial erstreckenden Vorsprung (9 bzw. 10) versehen, der in einer entsprechenden axialen Aufnahmenut (11) aufgenommen wird.

## Dichtringanordnung zwischen sich relativ zueinander drehenden Maschinenbauteilen

Die Erfindung bezieht sich auf eine Dichtringanordnung zwischen sich relativ zueinander drehenden Maschinenbauteilen, der im Oberbegriff des Patentanspruches erläuterten Art.

Aus der DE-AS 10 56 440 ist eine Dichtringanordnung der im Oberbegriff des Patentanspruches erläuterten Art bekannt.

Bei dieser bekannten Dichtringanordnung ist der mit einem quadratischen oder rechteckigen Querschnitt versehene, geschlitzte oder geteilte Dichtring aus reibungsminderndem Material mit axialem und radialen Spiel in der Nut des einen Bauteiles mit seinem größeren Radialabschnitt angeordnet und gleitet mit dem Umfang seines kleineren Radialabschnittes am anderen Bauteil. Der hierbei von Druckmittel beaufschlagte Dichtring soll an dem Maschinenbauteil gegen Drehung festgehalten werden, an dem er mit seiner größeren Fläche anliegt.

Diese bekannte Dichtringanordnung und die hierzu ausgeführten Überlegungen bezüglich der Flächenverhältnisse am Dichtring funktioniert bzw. treffen zu solange der Dichtring mit Druckmittel beaufschlagt wird.

Die bekannte Dichtringanordnung weist jedoch den Nachteil auf, daß bei der Anwendung im Bereich von Druckmittelverteilungen in automatischen Getrieben Schwierigkeiten auftreten, da gerade bei solchen Druckmittelverteilungskanä len jenachdem welche der von ihnen versorgten Servoeinrichtungen betätigt wird, einige Druckmittelkanäle mit Druckmittel beaufschlagt sind, entsprechend andere Druckmittelverteilungskanäle jedoch drucklos sind. Die diesen Kanälen zugeordneten Dichtringanordnungen weisen daher den Nachteil auf, daß der Dichtring in der Wellennut unkontrolliert zu rotieren beginnt, was zu erhöhtem Verschleiß an den Seitenflanken des Dichtringes führt.

Die Aufgabe der Erfindung ist es eine Dichtringanordnung zwischen sich relativ zueinander drehenden Maschinenbauteilen der im Oberbegriff des Patentanspruches erläuterten Art derart zu verbessern, daß der Dichtring formschlüssig an einem der beiden Maschinenbauteile festgelegt wird.

Gemäß der Erfindung wird diese Aufgabe gelöst, indem eine Dichtringanordnung gemäß dem Oberbegriff des Patentanspruches die im Kennzeichenteil des Patentanspruches aufgezeigten Merkmale aufweist.

Dadurch, daß der Dichtring an seiner einen, zur Druckseite liegenden Seitenflanke mit einem axialen Vorsprung versehen ist, der in einer entsprechenden axialen Nut aufgenommen wird, wird eine zuverlässige Sicherung gegen unerwünschtes Rotieren des Dichtringes mit einfachen Mitteln erzielt, ohne daß das infolge der Wärmeausdehnung des Materials des Dichtringes erforderliche axiale und radiale Spiel eingeschränkt oder die einfache Montage des geschlitzten oder geteilten Ringes beeinträchtigt wird.

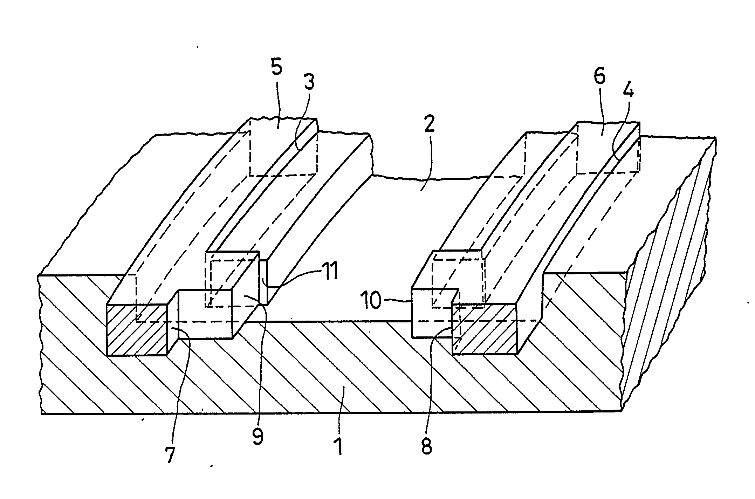

Die Erfindung wird anhand eines in der beiliegenden Zeichnung gezeigten Ausführungsbeispieles näher erläutert. Es zeigt:

Figur eine geschnittene Schrägrissansicht einer Dichtringanordnung der Erfindung.

In der Figur ist ein Maschinenbauteil 1 mit einer Druckmittelkanal-Ringnut 2 versehen, zu deren beiden Seiten Ringnuten 3 und 4 zur Aufnahme von im Querschnitt im wesentlichen quadratischen oder rechteckigen geschlitzten oder geteilten Dichtringen 5 und 6 vorgesehen sind. Die Dichtringe 5 und 6 können in herkömmlicher Weise aus federndem Metall oder aus elastischem Kunststoffmaterial bestehen und können infolge ihrer geschlitzten oder geteilten Form durch Aufweiten über das Bauteil 1 geschoben werden und in ihre Aufnahmenuten 3 und 4 einspringen.

Die Außenumfänge der Dichtringe 5 und 6 wirken hierbei gleitend mit einem weiteren Maschinenbauteil zusammen, das zur klareren Darstellung der Dichtringanordnung in der Zeichnung weggelassen wurde.

Insbesondere wenn die Dichtringe 5 und 6 aus modernen, reibungsmindernden Kunststoffen wie Teflon oder Viton bestehen, müssen sie mit axialem und radialem Spiel in ihren Ringnuten 3 und 4 angeordnet werden, da diese Materialien eine erhebliche Wärmeausdehnung aufweisen und diesem Verhalten durch eine entsprechende Bewegungsfreiheit der Dichtringe 5 und 6 in ihren Ringnuten 3 und 4 Rechnung getragen werden. muß.

Bei bisher verwendeten Dichtringen mit quadratischem oder rechteckigem Querschnitt, die in den entsprechenden Ringnuten mit axialem und radialem Spiel angeordnet wurden, traten Schwierigkeiten dadurch auf, daß die Dichtringe durch die Drehbewegung des äußeren Maschinenbauteiles in unkontrollierter Weise mitrotierten, wodurch es zu einem erhöhten Verschleiß der Dichtringe an ihren Seitenflanken kam.

Zur Vermeidung dieser Schwierigkeiten sind die Dichtringe 5 und 6 gemäß der Erfindung an ihren zur Druckseite (Druckmittelkanal 2) liegenden Seitenflanken 7 bzw. 8 mit axialen Vorsprüngen 9 bzw. 10 versehen. Zur Aufnahme dieser Vorsprünge 9 und 10 müssen im Maschinenbauteil 1 entsprechende axiale Nuten vorgesehen werden, die im vorliegenden Ausführungsbeispiel in Form einer gemeinsamen axialen Nut 11 vorliegt, die in einem Arbeitsgang hergestellt werden kann.

Selbstverständlich kann bei anderen Einbaugegebenheiten auch eine versetzte Anordnung der Aufnahmenuten vorgesehen werden.

Durch die axiale Ausrichtung der Vorsprünge zur Verdrehsicherung wird die Montage der Dichtringe im aufgeweiteten Zustand nicht erschwert.

## Ansprüche

Dichtringanordnung zwischen sich relativ zueinander drehenden Maschinenbauteilen, mit einem, einen quadratischen oder rechteckigen Querschnitt aufweisenden, geschlitzten oder geteilten Dichtring aus reibungsminderndem Material, der mit axialem und radialem Spiel in einer Nut des einen Bauteiles mit seinem größeren Radialabschnitt angeordnet ist und mit dem Umfang seines kleineren Radialabschnittes am anderen Bauteil gleitet, **dadurch gekennzeichnet** , daß der Dichtring (5 bzw. 6) an seiner einen, zur Druckseite (Druckmittelkanal 2) liegenden Seitenflanke (7 bzw. 8) mit einem sich axial erstreckenden Vorsprung (9 bzw. 10) versehen ist, der in einer entsprechenden axialen Aufnahmenut (11) aufgenommen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-B-1 056 440 (ZAHNRADFABRIK FRIEDRICHSHAFEN AG) <br> * Figuren; Anspruch 1 * <br> --- | 1 | F 16 J 9/24 <br> F 16 J 15/54 <br> F 16 J 15/34 |
| Y | GB-A- 441 224 (A. BONFA) <br> * Figuren; Seite 1, Zeilen 84-92 * <br> --- | 1 | |
| A | US-A-4 253 713 (J.W. CHAMBERS) <br> * Figuren; Zusammenfassung * <br> ----- | 1 | |

RECHERCHIERTE
SACHGEBIETE (Int. Cl.4)

F 16 J
F 16 H

Der vorliegende Recherchenbericht wurde für alle Patentansprüche erstellt

| Recherchenort | Abschlußdatum der Recherche | Prüfer |
|---|---|---|
| DEN HAAG | 12-02-1988 | NARMINIO A. |